# EUROPÄISCHE PATENTSCHRIFT

(11) **EP 4 434 687 B1**
(45) Veröffentlichungstag und Bekanntmachung des Hinweises auf die Patenterteilung: **29.04.2026**
(21) Anmeldenummer: 24194089.9
(22) Anmeldetag: 07.03.2022
(51) Int. Cl.: B25F 5/02

(54) **HANDGEFÜHRTES ARBEITSGERÄT MIT EINEM FÜHRUNGSROHR**
HAND-HELD WORK DEVICE WITH A GUIDE TUBE
APPAREIL DE TRAVAIL MANUEL DOTÉ D'UN TUBE DE GUIDAGE

(30) Priorität: 15.03.2021 EP 21162602
(43) Veröffentlichungstag der Anmeldung: 25.09.2024
(62) Teilanmeldung aus: 22160598.3
(73) Patentinhaber: Andreas Stihl AG & Co. KG, 71336 Waiblingen (DE)
(72) Erfinder: Mandel, Roland, 70239 Stuttgart (DE); Hefti, Jonas, 70176 Stuttgart (DE); Bejblik, Jan, 15000 Prague (CZ)
(74) Vertreter: Reinhardt, Annette

(56) Entgegenhaltungen:
- EP-B1- 2 875 904
- CN-A- 112 470 737

## Beschreibung

Die Erfindung betrifft ein handgeführtes Arbeitsgerät der im Oberbegriff des Anspruchs 1 angegebenen Gattung.

Aus der DE 10 2014 006 910 A1 ist ein Arbeitsgerät bekannt, das ein erstes Bedienelement, nämlich einen Gashebel, sowie ein zweites Bedienelement zum Betätigen eines Sicherheitssperrmechanismus aufweist. Das zweite Bedienelement ist um eine Achse drehbar, die parallel zur Längsmittelachse des Führungsrohrs liegt und oberhalb dieser angeordnet ist. Die Lagerung erfolgt über ein etwa halbkreisförmiges Führungselement.

Aus der EP 2 875 904 B1 geht eine Schaltvorrichtung für Gartengeräte hervor, die ein Geschwindigkeitsbedienelement, einen Schieber, ein Sperrbedienelement und ein am Sperrbedienelement schwenkbar gelagertes Blockierelement aufweist. Die Schwenkachsen von Sperrbedienelement und Blockierelement verlaufen parallel zueinander.

Die CN 112470737 A offenbart ein Arbeitsgerät mit einem Bedienelement und einem schwenkbar gelagerten Sperrhebel.

Der Erfindung liegt die Aufgabe zugrunde, ein handgeführtes Arbeitsgerät anzugeben, das einen vorteilhaften Aufbau aufweist.

Hierzu ist vorgesehen, dass das zweite Bedienelement um eine zweite Schwenkachse schwenkbar gelagert ist und das Halteelement um eine vierte Schwenkachse schwenkbar gelagert ist, und dass die zweite Schwenkachse in einer Ebene liegt, die senkrecht zur vierten Schwenkachse verläuft.

Die Anordnung der zweiten Schwenkachse in einer Ebene, die senkrecht zur vierten Schwenkachse verläuft, ist ein von der Anordnung der Schwenklager des zweiten Bedienelements unabhängiger erfinderischer Gedanke. Die Anordnung der zweiten Schwenkachse in einer Ebene, die senkrecht zur vierten Schwenkachse verläuft ist auch für Arbeitsgeräte vorteilhaft, bei denen das zweite Bedienelement nicht mit zwei Schwenklagern gelagert ist, die auf gegenüberliegenden Seiten einer Mittelebene angeordnet sind und/oder für Arbeitsgeräte, deren zweites Bedienelement keine Öffnung aufweist, durch die das Führungsrohr ragt.

Die zweite Schwenkachse des zweiten Bedienelements und die vierte Schwenkachse des Halteelements verlaufen demnach nicht parallel zueinander. Vorteilhaft verläuft die zweite Schwenkachse in einer Ebene, die die Längsmittelachse des Führungsrohrs enthält. Besonders bevorzugt liegen die zweite Schwenkachse und die vierte Schwenkachse bei Blickrichtung in Richtung der Längsmittelachse in einem Winkel von 90° zueinander. Die zweite Schwenkachse und die vierte Schwenkachse können sich schneiden, insbesondere in einem Winkel von 90°, oder in einem Abstand zueinander verlaufen. Die vierte Schwenkachse verläuft bevorzugt parallel zur ersten Schwenkachse des ersten Bedienelements und zur dritten Schwenkachse des dritten Bedienelements. Dadurch, dass die zweite Schwenkachse und die vierte Schwenkachse nicht parallel zueinander verlaufen, können die vom zweiten Bedienelement in das Halteelement eingeleiteten Kräfte gut in das Gehäuse des Arbeitsgeräts eingeleitet werden und wirken nur teilweise in Betätigungsrichtung des Halteelements.

Insbesondere umfasst das Arbeitsgerät ein Führungsrohr, an dem eine Werkzeugeinheit mit dem mindestens einen Werkzeug angeordnet ist, wobei an dem Führungsrohr der mindestens eine Handgriff angeordnet ist, wobei der Handgriff das Führungsrohr umschließt, wobei die erste Schwenkachse quer zu einer Längsmittelachse des Führungsrohrs liegt, wobei das Führungsrohr eine Mittelebene aufweist, die eine Längsmittelachse des Führungsrohrs enthält und die parallel zur ersten Schwenkachse ausgerichtet ist, wobei das erste Bedienelement auf einer ersten Seite der Mittelebene aus dem Handgriff ragt, wobei das zweite Bedienelement an einem ersten Schwenklager und einem zweiten Schwenklager schwenkbar gelagert ist, wobei das erste Schwenklager auf der ersten Seite der Mittelebene angeordnet ist und das zweite Schwenklager auf einer gegenüberliegenden, zweiten Seite der Mittelebene angeordnet ist und wobei das zweite Bedienelement eine Öffnung aufweist, durch die das Führungsrohr ragt.

Insbesondere ist das zweite Bedienelement an einem ersten Schwenklager und einem zweiten Schwenklager schwenkbar gelagert. Die beiden Schwenklager sind auf gegenüberliegenden Seiten einer Mittelebene angeordnet. Die Mittelebene ist parallel zur ersten Schwenkachse des ersten Bedienelements ausgerichtet und enthält die Längsmittelachse des Führungsrohrs. Das Bedienelement weist eine Öffnung auf, durch die das Führungsrohr ragt. Das Bedienelement umgreift demnach das Führungsrohr. Dadurch ist bei einfachem und kompaktem Aufbau eine Schrägstellung der zweiten Schwenkachse gegenüber der Längsmittelachse des Führungsrohrs möglich. Dadurch wird eine ergonomische Bedienung ermöglicht.

Ein vorteilhafter Aufbau ergibt sich, wenn sich das zweite Bedienelement über einen Winkel von mindestens 180°, bevorzugt über einen Winkel von mindestens 270° um die Längsmittelachse des Führungsrohrs erstreckt. Ein Winkel von mindestens 270° ist insbesondere dann vorteilhaft, wenn das zweite Bedienelement mindestens drei Bedienabschnitte aufweist, an denen ein Bediener das zweite Bedienelement betätigen kann. Besonders bevorzugt erstreckt sich das zweite Bedienelement über den gesamten Umfang des Führungsrohrs, also über 360° um die Längsmittelachse um das Führungsrohr herum. Dadurch kann auf einfache Weise eine hohe Stabilität des zweiten Bedienelements erreicht werden.

Eine ergonomische Bedienung kann erreicht werden, wenn bei einer Blickrichtung parallel zur ersten Schwenkachse des ersten Bedienelements die zweite Schwenkachse des zweiten Bedienelements zur Längsmittelachse des Führungsrohrs um einen Winkel geneigt ist, der von 5° bis 85° beträgt. Vorteilhaft beträgt der Winkel, um den die zweite Schwenkachse zur Längsmittelachse des Führungsrohrs in der Blickrichtung parallel zur ersten Schwenkachse geneigt ist, von 10° bis 60°, insbesondere von 15° bis 45°, besonders bevorzugt von 20° bis 30°.

Das zweite Bedienelement wird vom Bediener vorzugsweise mit dem Daumen betätigt. Die Bedienung des zweiten Bedienelements erfolgt vorzugsweise, während die Hand des Bedieners den Handgriff, also auch das Führungsrohr, zumindest teilweise umschließt. Aufgrund des Neigungswinkels der zweiten Schwenkachse zur Längsmittelachse kann die Betätigungsbewegung des zweiten Bedienelements an die ergonomische Bewegung des Daumens um das Daumengelenk des Bedieners angenähert werden, so dass sich eine ergonomische Betätigung ergibt.

Bevorzugt schneidet die zweite Schwenkachse die Längsmittelachse des Führungsrohrs. Vorteilhaft liegen die zweite Schwenkachse und die Längsmittelachse des Führungsrohrs bei Blickrichtung senkrecht auf die Mittelebene deckungsgleich übereinander.

Vorteilhaft ist das zweite Bedienelement Teil einer Sperreinrichtung, die eine unbeabsichtigte Betätigung des ersten Bedienelements verhindert. Vorteilhaft sperrt das zweite Bedienelement in einer unbetätigten Stellung eine Bewegung des ersten Bedienelements in Richtung auf eine betätigte Stellung des ersten Bedienelements. Das zweite Bedienelement sperrt das erste Bedienelement vorteilhaft mechanisch. Insbesondere sperrt das zweite Bedienelement das erste Bedienelement unmittelbar. Bevorzugt liegt das zweite Bedienelement in unbetätigter Stellung im Schwenkweg des ersten Bedienelements. Befindet sich das zweite Bedienelement in seiner unbetätigten Stellung, kann das erste Bedienelement nicht betätigt und der Antriebsmotor nicht in Betrieb genommen werden.

Dadurch, dass das erste Schwenklager des zweiten Bedienelements und das erste Bedienelement auf der gleichen Seite der Mittelebene angeordnet sind, kann die Sperrkraft, die bei einer Betätigung des ersten Bedienelements bei unbetätigtem zweitem Bedienelement vom ersten Bedienelement auf das zweite Bedienelement ausgeübt wird, direkt in das erste Schwenklager eingeleitet werden.

Vorteilhaft weist der Handgriff eine Querebene auf, die senkrecht zur Längsmittelachse in einem dem ersten Bedienelement entfernt liegenden Bereich des Handgriffs verläuft. Bevorzugt verläuft die Querebene in einem Bereich, in dem ein kleiner Finger des Bedieners anzuordnen ist. Das erste Schwenklager weist zu der Querebene vorteilhaft einen größeren Abstand auf als das zweite Schwenklager. Vorteilhaft weist die erste Schwenkachse zur Querebene einen Abstand auf, der kleiner als der Abstand des ersten Schwenklagers zur Querebene ist. Vorteilhaft sind das zweite Schwenklager und die erste Schwenkachse des ersten Bedienelements näherungsweise im gleichen Abstand zur Querebene angeordnet.

Um eine ergonomische Bedienung für Rechtshänder und für Linkshänder zu ermöglichen, ist vorgesehen, dass das zweite Bedienelement aus der unbetätigten Stellung in einer ersten Schwenkrichtung in eine erste Freigabestellung und in einer zweiten, entgegengesetzten Schwenkrichtung in eine zweite Freigabestellung verschwenkbar ist. Dadurch kann das zweite Bedienelement sowohl mit dem Daumen der rechten Hand als auch mit dem Daumen der linken Hand ergonomisch betätigt werden. Das zweite Bedienelement weist dabei vorteilhaft mehrere Betätigungsabschnitte auf, so dass der Bediener in jeder Lage des Arbeitsgeräts einen Betätigungsabschnitt des zweiten Bedienelements greifen kann.

Das zweite Bedienelement ist vorteilhaft gefedert gelagert. Die Feder spannt das zweite Bedienelement dabei vorteilhaft in die unbetätigte Stellung vor. In vorteilhafter Gestaltung ist die Feder eine Drehfeder oder Schenkelfeder, die sich mit beiden Schenkeln sowohl gegenüber dem Gehäuse als auch gegenüber dem zweiten Bedienelement abstützt. Dies ist insbesondere vorteilhaft, wenn das zweite Bedienelement in zwei entgegengesetzte Schwenkrichtungen in eine erste und eine zweite Freigabestellung verschwenkbar ist. Durch die Verwendung einer Schenkelfeder kann eine Vorspannung aus beiden Freigabestellungen über eine einzige Feder realisiert werden.

Vorteilhaft stützen sich beide Schenkel der Schenkelfeder am gleichen Gehäuseteil des Gehäuses ab. Stützt sich die Schenkelfeder mit beiden Schenkeln an unterschiedlichen Gehäuseteilen ab, so können Lagetoleranzen zwischen den Gehäuseteilen auftreten, die unterschiedliche Betätigungs- und Rückstellkräfte für die beiden Schwenkrichtungen bedingen. Durch die Abstützung der beiden Schenkel am gleichen Gehäuseteil können Lagetoleranzen zwischen der Abstützung der Schenkel minimiert werden.

Vorteilhaft ist an dem Handgriff ein drittes Bedienelement um eine dritte Schwenkachse schwenkbar gelagert. Es kann vorgesehen sein, dass das dritte Bedienelement Teil einer Sperreinrichtung ist, und dass in unbetätigtem Zustand des dritten Bedienelements das erste Bedienelement oder das zweite Bedienelement nicht betätigt werden können.

In bevorzugter alternativer Gestaltung dient das dritte Bedienelement dazu, das zweite Bedienelement in seiner Freigabestellung zu halten. Bei dieser Gestaltung bildet das dritte Bedienelement vorteilhaft keinen Teil einer Sperreinrichtung. Zum Betätigen des ersten Bedienelements und zur Inbetriebnahme des Antriebsmotors muss das dritte Bedienelement vorteilhaft nicht betätigt werden. Dient das dritte Bedienelement dazu, das zweite Bedienelement in seiner Freigabestellung zu halten, so muss das zweite Bedienelement vom Bediener nicht dauerhaft in der betätigten Stellung gehalten werden.

Vorteilhaft ist das dritte Bedienelement auf der zweiten Seite der Mittelebene angeordnet. Das erste Bedienelement und das dritte Bedienelement sind bevorzugt auf gegenüberliegenden Seiten der Mittelebene angeordnet. Dadurch kann das erste Bedienelement mit dem Zeigefinger und das dritte Bedienelement mit der Handfläche einer Hand des Bedieners betätigt werden. Bei dieser Anordnung kann das dritte Bedienelement mit geringer Kraftanstrengung durch den Bediener dauerhaft betätigt gehalten werden.

Vorteilhaft weist die dritte Schwenkachse einen geringeren Abstand zur Querebene auf als die erste Schwenkachse. Insbesondere weist die dritte Schwenkachse einen geringeren Abstand zur Querebene auf als das zweite Schwenklager.

Vorteilhaft verläuft die dritte Schwenkachse parallel zur ersten Schwenkachse. In besonders bevorzugter Gestaltung verläuft die dritte Schwenkachse durch das zweite Schwenklager. Es kann jedoch auch vorgesehen sein, dass die dritte Schwenkachse in einem Abstand zum zweiten Schwenklager verläuft.

Vorteilhaft weist das Arbeitsgerät Mittel auf, die das zweite Bedienelement in seiner Freigabestellung halten, solange das dritte Bedienelement sich in seiner betätigten Stellung befindet. Dadurch muss das zweite Bedienelement vorteilhaft nur zur Inbetriebnahme des Antriebsmotors betätigt werden und kann dann über das dritte Bedienelement in seiner betätigten Stellung gehalten werden.

Eine einfache Gestaltung ergibt sich, wenn das Arbeitsgerät ein Halteelement aufweist, auf das das dritte Bedienelement wirkt und das das zweite Bedienelement in seiner Freigabestellung hält, solange das dritte Bedienelement sich in seiner betätigten Stellung befindet. Dadurch, dass das dritte Bedienelement nicht unmittelbar auf das zweite Bedienelement wirkt, sondern über ein Halteelement, können die Bewegungen von drittem Bedienelement und zweitem Bedienelement entkoppelt werden. Das Halteelement kann so angeordnet werden, dass sich eine günstige Krafteinleitung in das zweite Bedienelement ergibt, während das dritte Bedienelement so angeordnet werden kann, dass es vom Bediener ergonomisch betätigt und gehalten werden kann.

In besonders bevorzugter Gestaltung wirkt das dritte Bedienelement über eine Feder auf das Halteelement. Die Feder erlaubt es, das dritte Bedienelement zu betätigen, während das zweite Bedienelement noch nicht betätigt ist. Über die Feder kann das Halteelement vorgespannt werden, so dass das Halteelement in seine Halteposition gelangt, sobald das zweite Bedienelement in seine Freigabestellung verstellt wird. Die Feder erlaubt es, das zweite und das dritte Bedienelement in beliebiger Reihenfolge zu betätigen. Dadurch wird eine ergonomische, einfache Bedienung ermöglicht.

Besonders bevorzugt ist das Halteelement um eine vierte Schwenkachse schwenkbar gelagert. Die vierte Schwenkachse verläuft insbesondere parallel zur dritten Schwenkachse. Dadurch können ein günstiger Kraftverlauf und eine günstige Krafteinleitung in das Gehäuse des Arbeitsgeräts erreicht werden. Lagerkräfte am Halteelement können reduziert werden. Auch eine andere Anordnung der vierten Schwenkachse kann vorteilhaft sein. Es kann auch vorgesehen sein, dass das Halteelement selbst als Feder ausgebildet ist.

Ausführungsbeispiele der Erfindung werden im Folgenden anhand der Zeichnung erläutert. Es zeigen:
- Fig. 1: eine schematische Darstellung eines Bedieners mit einem handgeführten Arbeitsgerät,
- Fig. 2: eine perspektivische Darstellung des Bereichs eines Gehäuses eines Arbeitsgeräts mit einem Handgriff,
- Fig. 3: eine perspektivische Darstellung des Handgriffs, wobei eine vordere Gehäusehalbschale des Handgriffs entfernt ist, so dass die innenliegenden Elemente sichtbar sind,
- Fig. 4: einen Längsschnitt durch den Handgriff,
- Fig. 5: eine perspektivische Darstellung der Bedienelemente und des Halteelements des Handgriffs,
- Fig. 6: eine Explosionsdarstellung der Anordnung aus Fig. 3,
- Fig. 7: eine Darstellung der Anordnung aus Fig. 5, wobei das zweite Bedienelement in seiner unbetätigten Stellung und seinen beiden betätigten Stellungen dargestellt ist,
- Fig. 8: eine Schnittdarstellung durch die Anordnung aus Fig. 7 in unbetätigter Stellung des zweiten Bedienelements,
- Fig. 8a: eine ausschnittsweise vergrößerte Darstellung aus Fig. 8,
- Fig. 9: eine Schnittdarstellung entsprechend Fig. 8 mit dem zweiten Bedienelement in einer betätigten Stellung,
- Fig. 10 bis 12: Darstellungen entsprechend Fig. 3 bis Fig. 5, wobei das dritte Bedienelement betätigt ist,
- Fig. 13 bis 15: Darstellungen entsprechend Fig. 3 bis Fig. 5, wobei das zweite und das dritte Bedienelement betätigt sind,
- Fig. 16 bis 18: Darstellungen entsprechend Fig. 3 bis Fig. 5, wobei das erste, das zweite und das dritte Bedienelement betätigt sind,
- Fig. 19: eine Schnittdarstellung eines alternativen Ausführungsbeispiels des Griffs des Arbeitsgeräts mit unbetätigten Bedienelementen,
- Fig. 20: eine Schnittdarstellung des Griffs aus Fig. 19, wobei das zweite und das dritte Bedienelement betätigt sind,
- Fig. 21: eine Schnittdarstellung eines weiteren Ausführungsbeispiels des Griffs des handgeführten Arbeitsgeräts,
- Fig. 22: eine perspektivische Darstellung eines weiteren Ausführungsbeispiels eines Handgriffs eines handgeführten Arbeitsgeräts,
- Fig. 23: eine schematische Schnittdarstellung des Handgriffs aus Fig. 22 bei unbetätigten Bedienelementen,
- Fig. 24: eine perspektivische Darstellung des zweiten Bedienelements des Handgriffs aus Fig. 22,
- Fig. 25: eine schematische Schnittdarstellung des Handgriffs aus Fig. 22 bei betätigten Bedienelementen,
- Fig. 26 bis 28: perspektivische Darstellungen von Teilen des Handgriffs in der Position der Bedienelemente gemäß Fig. 25,
- Fig. 29: einen Schnitt durch den Handgriff im Bereich des ersten Lagerzapfens des zweiten Bedienelements,
- Fig. 30: eine Seitenansicht des zweiten Bedienelements.

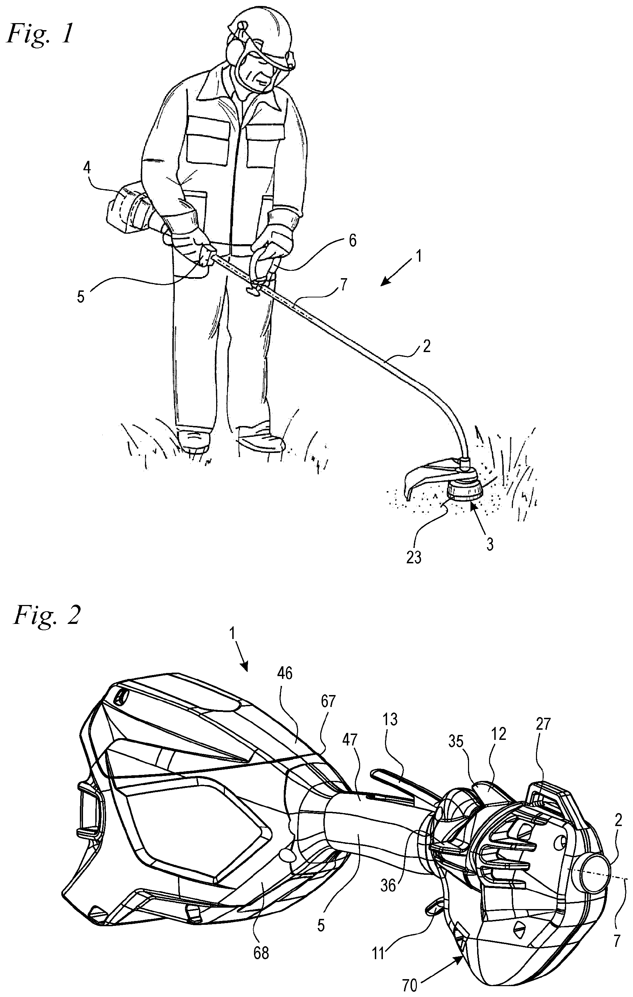

Fig. 1 zeigt schematisch ein handgeführtes Arbeitsgerät 1, das von einem Bediener gehalten wird. Das Arbeitsgerät 1 weist ein Führungsrohr 2 auf, das an seinem freien Ende eine Werkzeugeinheit 3 trägt. Im Ausführungsbeispiel ist das Arbeitsgerät 1 ein Freischneider. Das Arbeitsgerät 1 kann jedoch auch ein anderes handgeführtes Arbeitsgerät, insbesondere ein Arbeitsgerät mit einem Führungsrohr wie beispielsweise ein Hochentaster, eine Heckenschere am langen Schaft oder dergleichen sein. Die Werkzeugeinheit 3 umfasst ein Werkzeug 23, im Ausführungsbeispiel einen Mähfaden. Die Werkzeugeinheit 3 kann außerdem ein Getriebe und /oder einen Antriebsmotor umfassen. Im Ausführungsbeispiel ist ein schematisch dargestellter Antriebsmotor 4 an dem der Werkzeugeinheit 3 abgewandten Ende des Führungsrohrs 2 angeordnet. Auch eine andere Anordnung des Antriebsmotors 4, beispielsweise an der Werkzeugeinheit 3, kann vorteilhaft sein.

Am Führungsrohr 2 sind im Ausführungsbeispiel ein Handgriff 5 sowie ein Bügelgriff 6 angeordnet. Anstatt des Bügelgriffs 6 kann auch ein anderer weiterer Handgriff vorgesehen sein. Der Handgriff 5 umschließt das Führungsrohr 2. Das Führungsrohr 2 weist eine Längsmittelachse 7 auf.

Fig. 2 zeigt ein Ausführungsbeispiel eines akkugetriebenen Arbeitsgeräts 1, nämlich eines Freischneiders. In Fig. 2 ist das Führungsrohr 2 geschnitten dargestellt. Der Handgriff 5 ist Teil eines Gehäuses 46. Im Gehäuse 46 kann, beispielsweise wie in Fig. 1 schematisch dargestellt, der Antriebsmotor 4 angeordnet sein. Im Ausführungsbeispiel nach Fig. 2 ist das Gehäuse 46 zur Aufnahme eines Akkus oder einer Batterie ausgebildet.

Der Handgriff 5 ist im Ausführungsbeispiel integral mit dem Gehäuse 46 ausgebildet. Das Gehäuse 46 ist im Ausführungsbeispiel aus zwei Gehäusehalbschalen 67 und 68 aufgebaut, die parallel zur Längsmittelachse 7 des Führungsrohrs 2 geteilt sind. Der Handgriff 5 bildet einen Griffabschnitt 47, den der Bediener mit seiner Hand umgreifen kann. Das Führungsrohr 2 ist durch den Griffabschnitt 47 geführt. Der Handgriff 5 kann vorzugsweise auch separat vom Gehäuse 46 ausgebildet sein.

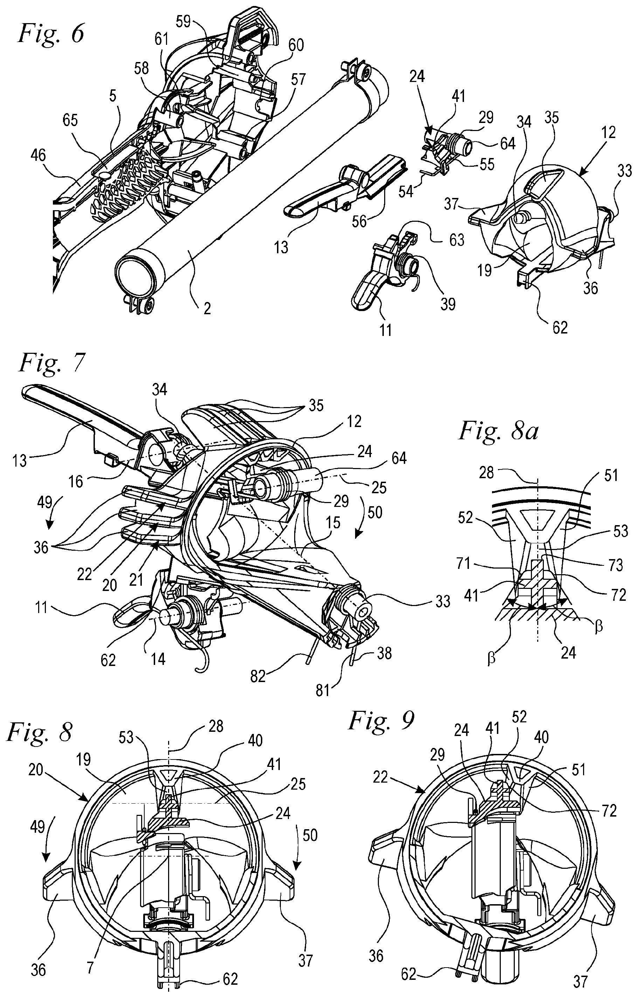

Am Handgriff 5 sind ein erstes Bedienelement 11, ein zweites Bedienelement 12 sowie ein drittes Bedienelement 13 so angeordnet, dass sie vom Bediener gegriffen werden können. Das erste Bedienelement 11 und das zweite Bedienelement 12 sind benachbart zum Griffabschnitt 47 angeordnet. Das dritte Bedienelement 13 erhebt sich im Ausführungsbeispiel aus dem Griffabschnitt 47. Das zweite Bedienelement 12 weist mehrere Bedienabschnitte auf, von denen in Fig. 2 ein erster Bedienabschnitt 35 und ein zweiter Bedienabschnitt 36 gezeigt sind. Ein dritter Bedienabschnitt 37 ist in Fig. 6 dargestellt. Benachbart zum zweiten Bedienelement 12 ist am Gehäuse 46 eine Tragöse 27 angeordnet, in die ein Traggurt eingehängt werden kann.

Das Gehäuse 46 bildet ein Griffgehäuse 70, an dem der Handgriff 5 ausgebildet ist und in dem die Bedienelemente 11, 12 und 13 gelagert sind.

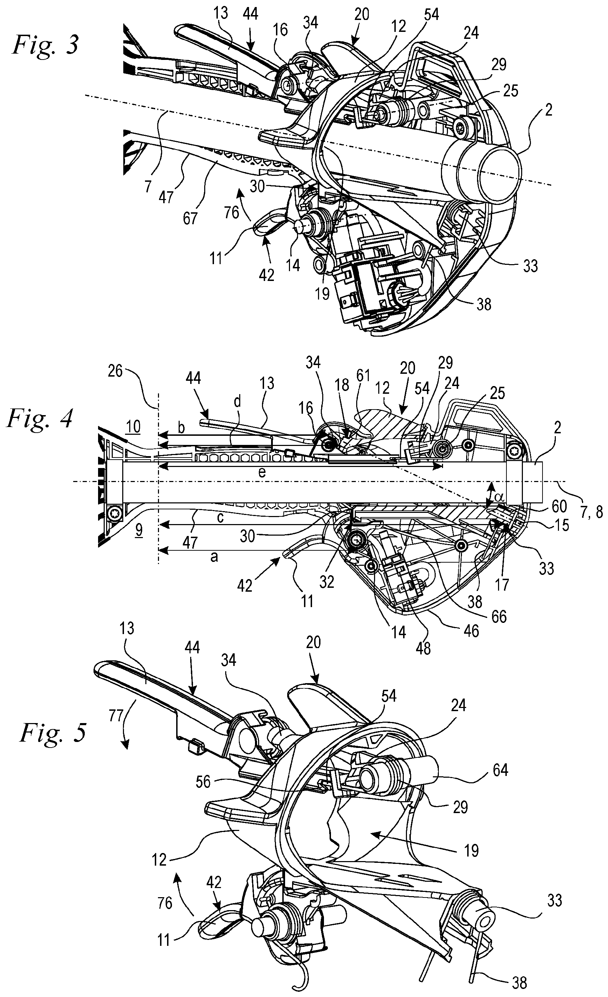

In Fig. 3 ist die zweite Gehäusehalbschale 68 nicht dargestellt, so dass das durch den Griffabschnitt 47 geführte Führungsrohr 2 sichtbar ist. Wie Fig. 3 zeigt, ist das erste Bedienelement 11 um eine erste Schwenkachse 14 schwenkbar gelagert. Das dritte Bedienelement 13 ist um eine dritte Schwenkachse 16 schwenkbar gelagert. Die dritte Schwenkachse 16 liegt vorteilhaft parallel zur ersten Schwenkachse 14.

Das dritte Bedienelement 13 ist mit einem Halteelement 24 gekoppelt. Vorteilhaft ist das dritte Bedienelement 13 über eine Feder 29 mit dem Halteelement 24 gekoppelt. Das Halteelement 24 ist im Ausführungsbeispiel als schwenkbarer Hebel ausgebildet. Das Halteelement 24 ist um eine vierte Schwenkachse 25 schwenkbar gelagert. Im Ausführungsbeispiel verläuft die vierte Schwenkachse 25 parallel zur dritten Schwenkachse 16. Die vierte Schwenkachse 25 verläuft vorteilhaft parallel zur ersten Schwenkachse 14.

Das zweite Bedienelement 12 umgreift im Ausführungsbeispiel das Führungsrohr 2. Das zweite Bedienelement 12 kann vorteilhaft von einer Feder 38 in eine unbetätigte Stellung 20 zurückgestellt werden. Das zweite Bedienelement 12 ist von der Feder 38 in Richtung auf seine in den Fig. 3 bis 5 dargestellte unbetätigte Stellung 20 vorgespannt. Im Ausführungsbeispiel ist die Feder 38 eine Drehfeder, deren beide Schenkel 81 und 82 (Fig. 7) sich am zweiten Bedienelement 12 und am Gehäuse 47 abstützen. Wie Fig. 6 zeigt, weist das Griffgehäuse 70 eine Aussparung 57 für die Feder 38 auf.

Das zweite Bedienelement 12 weist zur Lagerung einen ersten Lagerzapfen 33 sowie einen zweiten Lagerzapfen 34 auf.

Wie Fig. 4 zeigt, ragt der erste Lagerzapfen 33 in eine Aufnahme 60 des Griffgehäuses 70 und bildet mit dieser ein erstes Schwenklager 17. Der zweite Lagerzapfen 34 ist in einer Aufnahme 61 des Griffgehäuses 70 gelagert und bildet mit dieser ein zweites Schwenklager 18. Auch eine andere Gestaltung der Schwenklager 17 und 18 kann vorteilhaft sein. Insbesondere können Lagerzapfen 33 und 34 am Griffgehäuse 70 ausgebildet sein, die in Aufnahmen 60, 61 des zweiten Bedienelements 12 greifen. An den beiden Schwenklagern 17 und 18 ist das zweite Bedienelement 12 um eine zweite Schwenkachse 15 schwenkbar gelagert. Die zweite Schwenkachse 15 verläuft bei Blickrichtung in Richtung der ersten Schwenkachse 14 zur Längsmittelachse 7 des Führungsrohrs 2 um einen Winkel α geneigt. Die zweite Schwenkachse 15 verläuft demnach nicht parallel zur Längsmittelachse 7. Der Winkel α beträgt vorteilhaft von 5° bis 85°, insbesondere von 10° bis 60°, bevorzugt von 15° bis 45°, besonders bevorzugt von 20° bis 30°. Im Ausführungsbeispiel ist ein Winkel α von etwa 25° vorgesehen. Dadurch ist eine ergonomische Bewegungsrichtung des zweiten Bedienelements 12 beim Betätigen möglich. Wie die Fig. 3 und 5 zeigen, weist das zweite Bedienelement 12 eine Öffnung 19 auf, durch die das Führungsrohr 2 ragt. Das zweite Bedienelement 12 umgibt das Führungsrohr 2 im Ausführungsbeispiel über seinen gesamten Umfang. Das zweite Bedienelement 12 erstreckt sich demnach über einen Winkel von 360° um die Längsmittelachse 7. Bevorzugt umschließt das zweite Bedienelement 12 das Führungsrohr 2 über mindestens 180°, insbesondere mindestens 270° des Umfangs des Führungsrohrs 2. Das zweite Bedienelement 12 erstreckt sich vorteilhaft über einen Winkel von mindestens 180°, insbesondere mindestens 270° um die Längsmittelachse 7 des Führungsrohrs 2. Das zweite Bedienelement 12 erstreckt sich dabei vorteilhaft über den genannten Winkelbereich um das Führungsrohr 2 herum.

Wie Fig. 4 zeigt, schneidet die zweite Schwenkachse 15 im Ausführungsbeispiel die Längsmittelachse 7. Die Längsmittelachse 7 liegt in einer Mittelebene 8. Die Mittelebene 8 verläuft parallel zur ersten Schwenkachse 14 des ersten Bedienelements 11. Das erste Schwenklager 17 ist auf einer ersten Seite 9 der Mittelebene 8 angeordnet. Im Ausführungsbeispiel befinden sich das erste Schwenklager 17 und das erste Bedienelement 11 auf der gleichen Seite 9 der Mittelebene 8. Das zweite Schwenklager 18 ist auf der gegenüberliegenden, zweiten Seite 10 der Mittelebene 8 angeordnet. Im Ausführungsbeispiel sind auch das dritte Bedienelement 13 und das Halteelement 24 auf der zweiten Seite 10 der Mittelebene 8 angeordnet. Das Halteelement 24 kann auf der ersten Seite 9 oder auf der zweiten Seite 10 der Mittelebene 8 in das zweite Bedienelement 12 eingreifen. Bevorzugt greift das Halteelement 24 auf der zweiten Seite 10 der Mittelebene 8 in das zweite Bedienelement 12 ein.

In üblicher Arbeitshaltung des Arbeitsgeräts 1 liegt die erste Seite 9 vorteilhaft unter der Mittelebene 8 und die zweite Seite 10 vorteilhaft über der Mittelebene 8. Das erste Bedienelement 11 ist in üblicher Arbeitshaltung des Arbeitsgeräts 1 bevorzugt unterhalb des Führungsrohrs 2 angeordnet und das dritte Bedienelement 13 oberhalb des Führungsrohrs 2. Das zweite Bedienelement 12 ragt auf der zweiten Seite 10 der Mittelebene 8 aus dem Griffgehäuse 70.

Der Handgriff 5 weist eine Querebene 26 auf, die senkrecht zur Längsmittelachse 7 des Führungsrohrs 2 verläuft. Die Querebene 26 schneidet den Griffabschnitt 47 vorteilhaft in einem Bereich, in dem bei üblicher Handhaltung ein kleiner Finger eines Benutzers angeordnet ist. Die erste Schwenkachse 14 des ersten Bedienelements 11, beide Schwenklager 33 und 34 des zweiten Bedienelements 12 und die dritte Schwenkachse 16 des dritten Bedienelements 13 sind auf der gleichen Seite der Querebene 26 angeordnet. Auch die vierte Schwenkachse 25 des Halteelements 24 ist auf der gleichen Seite der Querebene 26 angeordnet wie die Schwenkachsen 14 und 16 der Bedienelemente 11 und 13 und die Schwenklager 33 und 34 des zweiten Bedienelements 12.

Wie Fig. 4 zeigt, weist die erste Schwenkachse 14 des ersten Bedienelements 11 einen Abstand a zur Querebene 26 auf. Die dritte Schwenkachse 16 des dritten Bedienelements 13 weist einen Abstand b zur Querebene 26 auf. Das erste Schwenklager 33 des zweiten Bedienelements 12 weist einen Abstand c zur Querebene 26 auf. Das zweite Schwenklager 34 des zweiten Bedienelements 12 weist einen Abstand d zur Querebene 26 auf. Die vierte Schwenkachse 25 des Halteelements 24 weist zur Querebene 26 einen Abstand e auf.

Der Abstand d des zweiten Schwenklagers 34 zur Querebene 26 ist größer als der Abstand c des ersten Schwenklagers 33 zur Querebene 26. Das erste Schwenklager 33 ist demnach weiter von der Querebene 26 entfernt als das zweite Schwenklager 34. Bezogen auf die Hand eines Benutzers am Griffabschnitt 47 ist die zweite Schwenkachse 15 nach vorne und unten geneigt.

Der Abstand a der ersten Schwenkachse 14 des ersten Bedienelements 11 zur Querebene 26 ist kleiner als der Abstand c des ersten Schwenklagers 33 des zweiten Bedienelements 12 zur Querebene 26. Der Abstand a des ersten Schwenklagers 14 des ersten Bedienelements 11 zur Querebene 26 entspricht etwa dem Abstand d des zweiten Schwenklagers 34 des zweiten Bedienelements 12 zur Querebene 26.

Der Abstand b der dritten Schwenkachse 16 des dritten Bedienelements 13 ist kleiner als der Abstand d des zweiten Schwenklagers 34 des zweiten Bedienelements 12 zur Querebene 26. Der Abstand e der vierten Schwenkachse 25 des Halteelements 24 ist größer als der Abstand d des zweiten Schwenklagers 34 des zweiten Bedienelements 12 zur Querebene 26. Der Abstand e der vierten Schwenkachse 25 des Halteelements 24 ist größer als der Abstand b der dritten Schwenkachse 16 des dritten Bedienelements 13 zur Querebene 26.

Die Sperreinrichtung 30 und das erste Schwenklager 33 des zweiten Bedienelements 12 sind etwa auf einer Linie angeordnet, die parallel zur Längsmittelachse 7 des Führungsrohrs 2 verläuft. Dadurch, dass die Sperreinrichtung 30 und das erste Schwenklager 33 auf der gleichen Seite der Mittelebene 8 und insbesondere auch etwa im gleichen Abstand zur Mittelebene 8 angeordnet sind, kann eine vom Bediener in Sperrstellung 32 mit dem ersten Bedienelement 11 auf die Sperreinrichtung 30 ausgeübte Kraft als Druckkraft unmittelbar über das erste Schwenklager 33 in das Griffgehäuse 70 eingeleitet werden.

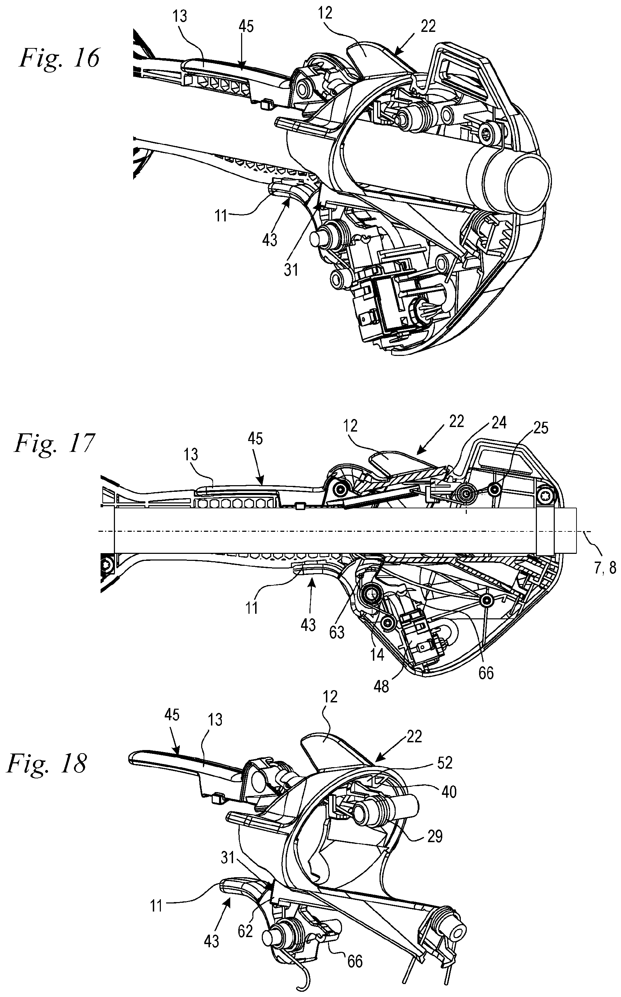

Zur Inbetriebnahme des Antriebsmotors 4 ist ein Schalter 48 vorgesehen. Der Schalter 48 ist im Ausführungsbeispiel auf der ersten Seite 9 der Mittelebene 8 angeordnet. Das erste Bedienelement 11 weist einen Betätigungsabschnitt 66 auf, der den Schalter 48 in betätigter Stellung des ersten Bedienelements 11 betätigt. Dies ist in den Figuren 16 bis 18 dargestellt. Das am Schalter 48 erzeugte Signal dient zur Ansteuerung des Antriebsmotors 4. Der Schalter 48 ist vorteilhaft ein Potentiometer.

Die Fig. 3 bis 5 zeigen das erste Bedienelement 11 in seiner unbetätigten Stellung 42. Das zweite Bedienelement 12 ist in seiner unbetätigten Stellung 20 angeordnet und das dritte Bedienelement 13 in seiner unbetätigten Stellung 44. Das zweite Bedienelement 12 bildet eine Sperreinrichtung 30 für das erste Bedienelement 11. In der in den Fig. 3 bis 5 dargestellten unbetätigten Stellung 20 des zweiten Bedienelements 12 befindet sich die Sperreinrichtung 30 in ihrer Sperrstellung 32. Das zweite Bedienelement 12 befindet sich im Schwenkweg des ersten Bedienelements 11. Das erste Bedienelement 11 schlägt bei einer Bewegung in Richtung auf seine betätigte Stellung am zweiten Bedienelement 12 an und kann dadurch nicht in Richtung eines Pfeils 76 (Fig. 3 und 5) in seine betätigte Stellung verstellt werden, wie zu Fig. 6 noch erläutert wird.

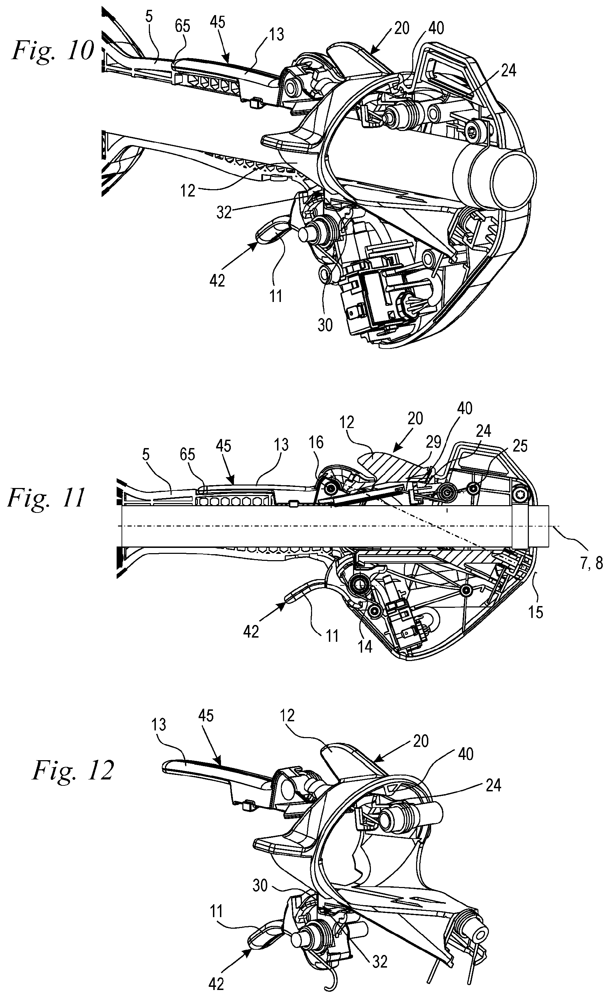

Wie die Fig. 3 bis 5 zeigen, wirkt das dritte Bedienelement 13 vorzugsweise über die Feder 29 auf das Halteelement 24. Das dritte Bedienelement 13 kann vom Bediener in Richtung eines Pfeils 77 betätigt werden, der in Fig. 5 gezeigt ist. Die Feder 29 liegt mit einem ersten Ende 54 an einer Aufnahme 56 des dritten Bedienelements 13 an. Befindet sich das zweite Bedienelement 12 in seiner unbetätigten Stellung 20, so kann das dritte Bedienelement 13 dennoch betätigt werden. Die betätigte Stellung 45 des dritten Bedienelements 13 ist in den Fig. 10 bis 12 gezeigt. Die Betätigung des dritten Bedienelements 13 bei unbetätigter Stellung 20 des zweiten Bedienelements 12 führt dazu, dass das Halteelement 24 verschwenkt wird, bis es am zweiten Bedienelement 12 anliegt. Eine weitere Betätigungsbewegung des dritten Bedienelements 13 führt zu elastischer Verformung der Feder 29, da sich das Halteelement 24 nicht mehr weiter bewegen kann.

Die Explosionsdarstellung in Fig. 6 zeigt die Gestaltung der Bedienelemente 11 bis 13 und deren Lagerung im Griffgehäuse 70 im Einzelnen. Am Griffgehäuse 70 ist ein Lagerzapfen 58 zur schwenkbaren Lagerung des dritten Bedienelements 13 vorgesehen. Wie Fig. 6 auch zeigt, weist die Feder 29 ein zweites Ende 55 auf, das sich am Halteelement 24 abstützt. Das Halteelement 24 weist außerdem einen Halteabschnitt 41 auf, der zur Anlage am zweiten Bedienelement 12 vorgesehen ist. In Fig. 6 sind auch drei Bedienabschnitte 35, 36 und 37 des zweiten Bedienelements 12 sowie die Öffnung 19 für das Führungsrohr 2 sichtbar. Die beiden Bedienabschnitte 36 und 37 sind etwa einander gegenüberliegend angeordnet. Der erste Bedienabschnitt 35 ist am Umfang zwischen dem zweiten Bedienabschnitt 36 und dem dritten Bedienabschnitt 37 angeordnet. Die Bedienabschnitte 35 bis 37 weisen vorzugsweise etwa radial nach außen und können beispielsweise einen Winkel von näherungsweise 90° einschließen. Auch eine andere Anzahl und/oder Anordnung von Bedienabschnitten 35, 36 und 37 kann vorteilhaft sein. Insbesondere ein zweites Bedienelement 12 mit zwei Bedienabschnitten bildet eine vorteilhafte alternative Ausführung.

Wie Fig. 6 auch zeigt, weist das zweite Bedienelement 12 einen Sperrabschnitt 62 auf, der einen Teil der Sperreinrichtung 30 bildet. Am ersten Bedienelement 11 ist ein Sperrbereich 63 ausgebildet, der bei unbetätigtem zweitem Bedienelement 12 am Sperrabschnitt 62 zur Anlage kommt und so eine Verstellung des ersten Bedienelements 11 in seine betätigte Stellung 43 verhindert. Das erste Bedienelement 11 ist vorzugsweise von einer Feder 39 in Richtung auf seine unbetätigte Stellung 42 vorgespannt.

In Fig. 6 sind auch die Aufnahmen 60 und 61 am Griffgehäuse 70 für die Lagerzapfen 33 und 34 des zweiten Bedienelements 12 sichtbar. Das Griffgehäuse 70 weist außerdem einen Lagerzapfen 59 für das Halteelement 24 auf. Der Halteabschnitt 41 erstreckt sich von einem Lagerabschnitt 64 des Halteelements 24, der am Lagerzapfen 59 anzuordnen ist, in Richtung auf das dritte Bedienelement 13.

Bei einer Betätigung des dritten Bedienelements 13 lenkt das dritte Bedienelement 13 das erste Ende 54 der Feder 29 bezogen auf das Führungsrohr 2 etwa radial nach außen aus. Auch der Halteabschnitt 41 wird dadurch radial nach außen vorgespannt. Das zweite Bedienelement 12 umgibt das Halteelement 24 an seinem Außenumfang, so dass das Halteelement 24 gegen das zweite Bedienelement 12 gedrückt wird. Es kann auch vorgesehen sein, dass das Halteelement 24 an einer anderen Stelle mit dem Bedienelement 12 zusammenwirkt.

Wie Fig. 7 schematisch zeigt, kann das zweite Bedienelement 12 aus seiner mittleren unbetätigten Stellung in einer ersten Schwenkrichtung 49 in eine erste betätigte Stellung 21 und in einer zweiten, entgegengerichteten Schwenkrichtung 50 in eine zweite betätigte Stellung 22 verschwenkt werden. In Fig. 7 sind alle drei Positionen des zweiten Bedienelements 12 in einer Darstellung eingezeichnet. Die betätigten Stellungen 21 und 22 sind sogenannte Freigabestellungen, in denen das erste Bedienelement 11 nicht durch das zweite Bedienelement 12 gesperrt ist. In den betätigten Stellungen 21 und 22 befindet sich der Sperrabschnitt 62 nicht im Schwenkbereich des Sperrbereichs 63. Die Schwenkrichtungen 49 und 50 sind auch in Fig. 8 eingezeichnet.

Fig. 8 zeigt das zweite Bedienelement 12 und das Halteelement 24 bei unbetätigter Stellung 20 des zweiten Bedienelements 12. Wie Fig. 8 zeigt, ragt das Halteelement 24 in die Öffnung 19 des zweiten Bedienelements 12. Das zweite Bedienelement 12 weist vorteilhaft einen nach innen ragenden Vorsprung 40 auf. Der Halteabschnitt 41 des Halteelements 24 ist gegenüberliegend zu dem Vorsprung 40 angeordnet und kann insbesondere dann, wenn das dritte Bedienelement 13 betätigt ist, an einer Stirnseite 53 des Vorsprungs 40 anliegen. Die zweite Schwenkachse 15 liegt in einer Ebene 28. Die Ebene 28 verläuft senkrecht zur vierten Schwenkachse 25. Im Ausführungsbeispiel enthält die Ebene 28 die Längsmittelachse 7 des Führungsrohrs 2 und enthält die zweite Schwenkachse 15 des zweiten Bedienelements 12. Es kann auch vorgesehen sein, dass die Ebene 28 parallel zur Längsmittelachse 7 und in einem Abstand zur Längsmittelachse 7 verläuft. Wie die Figuren 7 und 8 zeigen, verlaufen die vierte Schwenkachse 25 und die zweite Schwenkachse 15 nicht parallel zueinander.

Wie Fig. 8a zeigt, weist das Halteelement 24 an seinem Halteabschnitt 41 eine Stirnseite 73 auf, die zur Anlage an der Stirnseite 53 des Vorsprungs 40 ausgebildet ist. Der Vorsprung 40 weist außerdem Anlageflächen 51 und 52 auf, die zur Ebene 28 geneigt sind. Das Halteelement 24 weist eine erste Anlagefläche 71 auf, die in der ersten betätigten Stellung 21 des zweiten Bedienelements 12 mit der ersten Anlagefläche 51 am Vorsprung 40 in Kontakt kommen kann. An der gegenüberliegenden Seite weist das Halteelement 24 eine zweite Anlagefläche 72 auf, die in zweiter betätigter Stellung 22 mit der zweiten Anlagefläche 52 in Kontakt kommen kann. Die Anlageflächen 71 und 72 schließen mit der Mittelebene 29 jeweils einen Winkel β ein, der zur Stirnseite 73 hin zuläuft. Der Winkel β ist so gewählt, dass zwischen dem Halteelement 24 und dem zweiten Bedienelement 12 keine Selbsthemmung eintreten kann. Der Winkel β beträgt vorteilhaft 5° bis 40°; insbesondere 20° bis 30°. Als besonders vorteilhaft wird ein Winkel β von etwa 25° angesehen.

Fig. 9 zeigt die Anordnung bei betätigtem zweitem Bedienelement 12. Das zweite Bedienelement 12 befindet sich in seiner zweiten betätigten Stellung 22. Die Anlageflächen 52 und 72 liegen aneinander an. Die Anlagefläche 72 des Halteelements 24 befindet sich in Richtung auf die unbetätigte Stellung 20 des zweiten Bedienelements 12 im Schwenkweg des Vorsprungs 40. Dadurch kann das zweite Bedienelement 12 nicht in seine unbetätigte Stellung 20 zurückschwenken sondern wird von Halteelement 24 in der betätigten Stellung 22 gehalten.

Aufgrund der Schrägstellung der Anlagefläche 72 wird die vom zweiten Bedienelement 12 in Richtung auf seine unbetätigte Stellung 20 ausgeübte Kraft in eine vergleichsweise große Kraftkomponente, die parallel zur vierten Schwenkachse 25 wirkt, sowie eine deutlich kleinere Kraftkomponente, die in Richtung auf die Längsmittelachse 7 wirkt, zerlegt. Aufgrund des Winkels β (Fig. 8a) ist die radial nach innen wirkende Kraftkomponente auf das Halteelement 24 gering und das Halteelement 24 kann selbst von einer vergleichsweise schwach ausgelegten Feder 29 in seiner Stellung gehalten werden. Die vom zweiten Bedienelement 12 ausgeübten Kräfte können über den Lagerabschnitt 64 (Fig. 6 und 7) gut in das Griffgehäuse 70 abgeleitet werden, so dass sich eine stabile Ausführung ergibt. Vorteilhaft ist, wenn der Vorsprung 40, in den das Halteelement 24 greift, radial möglichst weit entfernt von der zweiten Schwenkachse 15 angeordnet ist.

In den Fig. 8 und 9 ist auch der Sperrabschnitt 62 der Sperreinrichtung 30 sichtbar.

In den Fig. 10 bis 12 befindet sich das erste Bedienelement 11 in seiner unbetätigten Stellung 42 und das zweite Bedienelement 12 befindet sich in seiner unbetätigten Stellung 20. Das dritte Bedienelement 13 wurde gegenüber der in den Fig. 3 bis 5 dargestellten unbetätigten Stellung 44 verschwenkt und befindet sich nun in seiner betätigten Stellung 45. In dieser Stellung liegt das dritte Bedienelement 13 am Außenumfang des Handgriffs 5 an. Im Ausführungsbeispiel ist am Handgriff 5 eine Vertiefung 65 vorgesehen, in der das dritte Bedienelement 13 liegt, so dass sich eine angenehme Außenkontur des Handgriffs 5 ergibt. Die Vertiefung 65 ist auch in Fig. 6 dargestellt. Aufgrund der Verschwenkung des dritten Bedienelements 13 wurde die Feder 29 vorgespannt. Das Halteelement 24 liegt am Vorsprung 40 des zweiten Bedienelements 12 an.

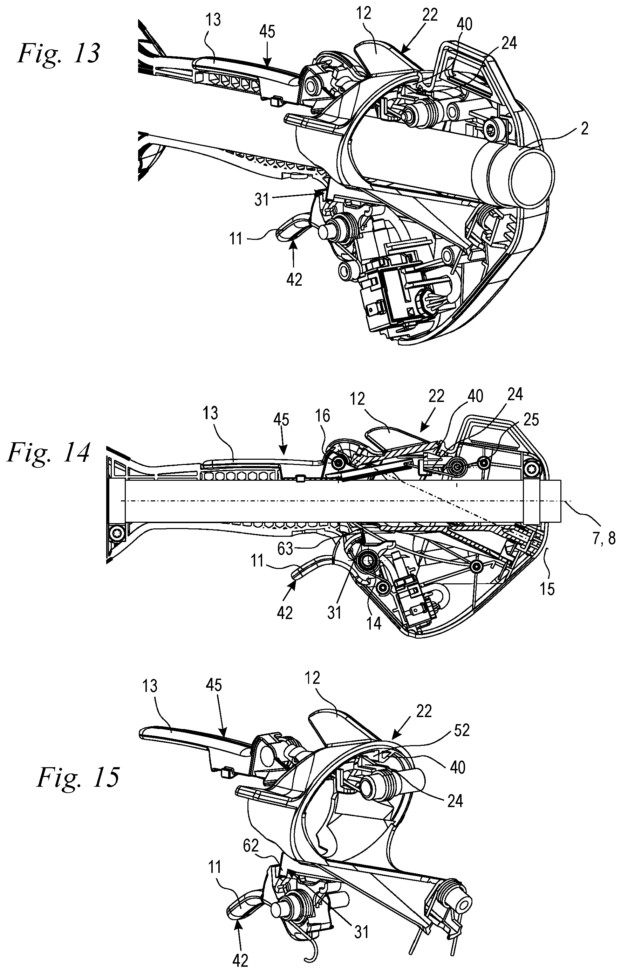

Die Fig. 13 bis 15 zeigen die Anordnung, nachdem das zweite Bedienelement 12 in seine zweite betätigte Stellung 22 verschwenkt wurde. Eine entsprechende Anordnung ergibt sich, wenn das zweite Bedienelement 12 in seine erste betätigte Stellung 21 verschwenkt wird. Der Vorsprung 40 hat sich in Umfangsrichtung zur Längsmittelachse 7 bewegt, so dass das Halteelement 24 radial nach außen schwenken konnte. Das Halteelement 24 liegt wie in Fig. 9 und Fig. 15 gezeigt an der zweiten Anlagefläche 52 des Vorsprungs 40 an. Dadurch kann das zweite Bedienelement 12 nicht zurück in seine unbetätigte Stellung 20 (Fig. 10 bis 12) schwenken.

Der Bediener kann zuerst das dritte Bedienelement 13 und anschließend das zweite Bedienelement 12 betätigen. Alternativ kann der Bediener auch zuerst das zweite Bedienelement 12 betätigen und anschließend das dritte Bedienelement 13. Die Bedienreihenfolge kann aufgrund der Feder 29 vom Bediener frei gewählt werden. Nachdem sich beide Bedienelemente 12, 13 in ihrer betätigten Stellung 45 und 21 oder 22 befunden haben, kann der Bediener das zweite Bedienelement 12 loslassen. Das zweite Bedienelement 12 wird vom dritten Bedienelement 13 über die Feder 29 und das Halteelement 24 in der betätigten Stellung 21 oder 22 gehalten.

In den Fig. 16 bis 18 befindet sich auch das erste Bedienelement 11 in seiner betätigten Stellung 43. Beim Verschwenken des zweiten Bedienelements 12 in seine zweite betätigte Stellung 22 wurde der Sperrabschnitt 62 (Fig. 15) aus dem Schwenkbereich des Sperrbereichs 63 des ersten Bedienelements 11 geschwenkt. Dies ist in den Fig. 16 bis 18 sichtbar. Entsprechend verschwenkt der Sperrabschnitt 62 in Gegenrichtung aus dem Schwenkbereich 63 des ersten Bedienelements 11, wenn das zweite Bedienelement in seine erste betätigte Stellung 21 verschwenkt wird. Die Sperreinrichtung 30 befindet sich in ihrer Freigabestellung 31. Das erste Bedienelement 11 betätigt einen Schalter 48 und nimmt so den Antriebsmotor 4 (Fig. 1) in Betrieb. Das erste Bedienelement 11 weist im Ausführungsbeispiel einen Betätigungsabschnitt 66 auf, der auf den Schalter 48 wirkt.

Der Sperrbereich 63 des ersten Bedienelements 11 liegt im Schwenkbereich des Sperrabschnitts 62 des zweiten Bedienelements 12. Das zweite Bedienelement 12 kann dadurch nicht in seine unbetätigte Stellung 20 zurückschwenken, solange das erste Bedienelement 11 betätigt ist. Das zweite Bedienelement 12 wird außerdem über das Halteelement 24, das mit einer seiner Anlageflächen 71, 72 am Vorsprung 40 anliegt, in seiner betätigten Stellung 22, 21 gehalten. Sobald der Bediener das dritte Bedienelement 13 und das erste Bedienelement 11 loslässt, verschwenkt das Halteelement 24 aufgrund der Kraft der Feder 29 zurück in seine Ausgangslage.

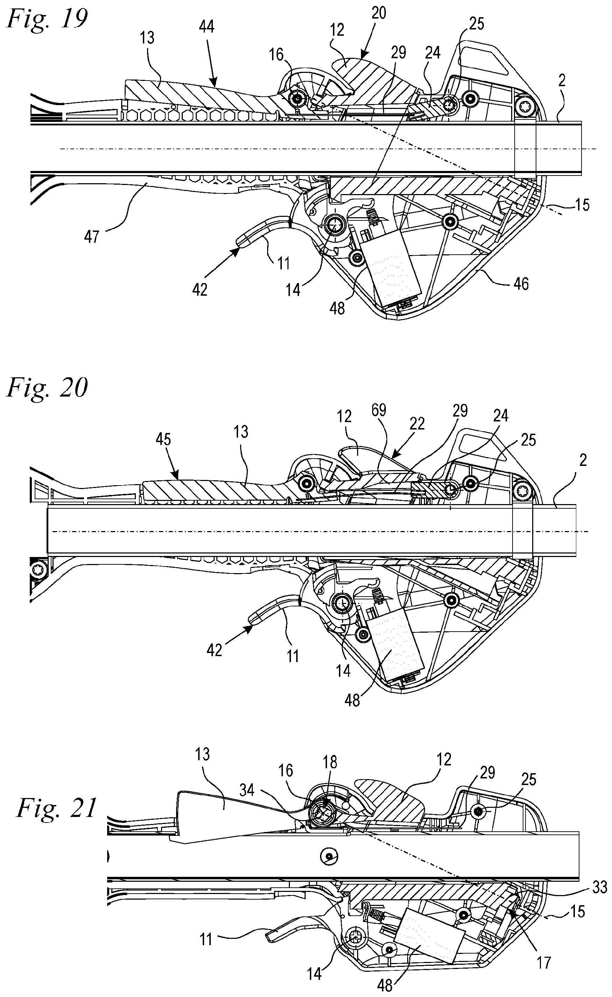

Die Fig. 19 und 20 zeigen ein alternatives Ausführungsbeispiel, bei dem das dritte Bedienelement 13 über eine als Blattfeder ausgebildete Feder 29 auf das Halteelement 24 wirkt. Das zweite Bedienelement 12 weist im Ausführungsbeispiel nach Fig. 19 und 20 eine Vertiefung 69 für das Halteelement 24 auf.

Bei dem in Fig. 21 dargestellten alternativen Ausführungsbeispiel ist das zweite Schwenklager 18 des zweiten Bedienelements 12 im Bereich der dritten Schwenkachse 16 des dritten Bedienelements 13 angeordnet. Die dritte Schwenkachse 16 verläuft im Ausführungsbeispiel nach Fig. 21 durch das zweite Schwenklager 18. In Fig. 21 ist das Halteelement 24 nicht dargestellt.

Weitere zu den Fig. 19 bis 21 nicht im Einzelnen beschriebene Merkmale entsprechen vorteilhaft denen des vorangegangenen Ausführungsbeispiels.

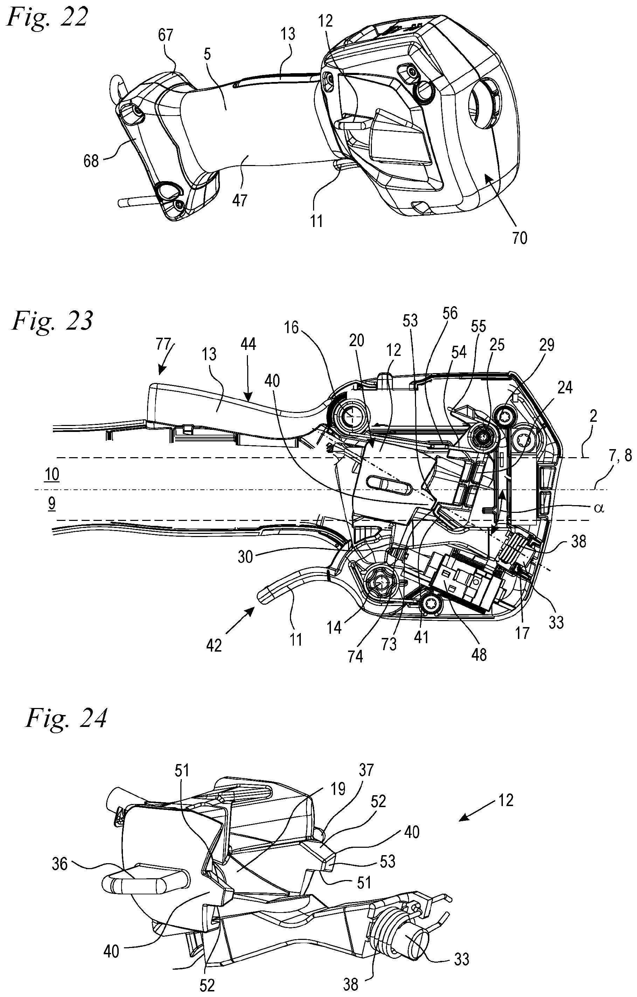

Die Figuren 22 bis 30 zeigen ein weiteres Ausführungsbeispiel eines Handgriffs eines Arbeitsgeräts. Gleiche Bezugszeichen bezeichnen in allen Figuren einander entsprechende Elemente. Zur Vermeidung von Wiederholungen wird zu Bezugszeichen, die in den Figuren 22 bis 30 dargestellt, aber nachfolgend nicht nochmals beschrieben sind, auf die Beschreibung der entsprechenden Elemente in den vorangegangenen Figuren verwiesen.

Das in den Figuren 22 bis 30 dargestellte Ausführungsbeispiel unterscheidet sich unter anderem durch die Gestaltung des Halteelements 24 und die Anordnung und Gestaltung von Vorsprung 40 und Halteabschnitt 41 von den vorangegangenen Ausführungsbeispielen. Wie Fig. 23 zeigt, ist ein Vorsprung 40 an einer Stirnseite 74 des zweiten Bedienelements 12 angeordnet. Die Stirnseite 74 verläuft um die zweite Schwenkachse 15 und ist eine bei Blickrichtung in Richtung der zweiten Schwenkachse 15 sichtbare Vorderseite des zweiten Bedienelements 12. Wie Fig. 24 zeigt, ist ein weiterer Vorsprung 40 an der Stirnseite 74 des zweiten Bedienelements 12 vorgesehen. Auch eine Ausführung mit nur einem Vorsprung 40 oder drei oder mehr Vorsprüngen 40 ist möglich.

In Fig. 23 ist schematisch die Lage des Führungsrohrs 2 dargestellt, das durch das zweite Bedienelement 12 ragt und vom zweiten Bedienelement 12 vollständig über 360° um die zweite Schwenkachse 15 umschlossen ist.

Fig. 24 zeigt die Gestaltung des zweiten Bedienelements 12 in perspektivischer Darstellung. Das zweite Bedienelement 12 weist zwei Bedienabschnitte 36 und 37 auf, die einander gegenüberliegend angeordnet sind. Wie Fig. 24 zeigt, ist das zweite Bedienelement 12 im Bereich der Öffnung 19 annähernd ringförmig um die zweite Schwenkachse 15 (Fig. 23) ausgebildet. Durch die Öffnung 19 ragt das Führungsrohr 2 (Fig. 23).

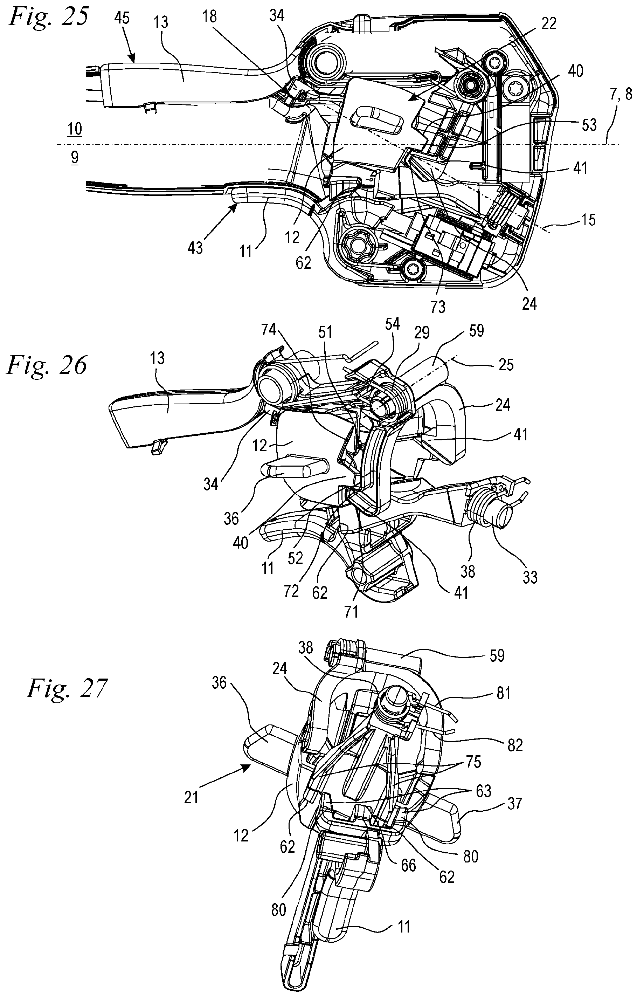

Wie Fig. 26 zeigt, ist das Halteelement 24 im Ausführungsbeispiel etwa U-förmig ausgebildet. Das Halteelement 24 ist mit dem Lagerzapfen 59 um die Schwenkachse 25 schwenkbar gelagert. Die Schwenkachse 25 ist benachbart zum Boden des durch das Halteelement 24 gebildeten U angeordnet. Die beiden Schenkel des U tragen die Halteabschnitte 41, die in Richtung auf eine Stirnseite 74 des zweiten Bedienelements 12 ragen und mit den Vorsprüngen 40 des zweiten Bedienelements 12 zusammenwirken.

In unbetätigter Stellung des zweiten Bedienelements 12 liegt, wie Fig. 23 zeigt, die Stirnseite 73 des Halteabschnitts 41 des Halteelements 24 benachbart zur Stirnseite 53 des Vorsprungs 40. Das Halteelement 24 ist über die Feder 29 mit dem dritten Bedienelement 13 gekoppelt. Die Feder 29 weist das erste Ende 54 auf, das in einer Aufnahme 56 des dritten Bedienelements 13 liegt. Das zweite Ende 55 der Feder 29 liegt am Halteelement 24 an. Wird das dritte Bedienelement 13 betätigt, so wird das Halteelement 24 von der Feder 29 gegen die Stirnseite 53 des zweiten Bedienelements 12 vorgespannt.

In der unbetätigten Stellung 20 des zweiten Bedienelements 12 (Fig. 23) sind die Anlageflächen 51 und 52 am Vorsprung 40 zur zweiten Schwenkachse 15 geneigt.

Die Figuren 25 bis 30 zeigen das zweite Bedienelement 12 in seiner zweiten betätigten Stellung 22. In dieser Stellung ist die Stirnseite 53 des Vorsprungs 40 aus dem Schwenkbereich der Stirnseite 73 des Halteabschnitts 41 verschwenkt. Das dritte Bedienelement 13 befindet sich in seiner betätigten Stellung 45, in der das Halteelement 24 gegen das zweite Bedienelement 12 vorgespannt ist. Aufgrund der Vorspannung ist das Halteelement 24 gegenüber der in den vorangegangenen Figuren dargestellten Position verschwenkt. Der Sperrabschnitt 62 hat sich aus dem Schwenkbereich des ersten Bedienelements 11 bewegt, so dass das erste Bedienelement 11 in seine betätigte Stellung 43 verstellt werden konnte.

Das Halteelement 24 liegt, wie Fig. 26 zeigt, in der verschwenkten Stellung mit einer Anlagefläche 72 des Halteabschnitts 41 an einer Anlagefläche 52 des Vorsprungs 40 an. Die Anlagefläche 52 liegt im Schwenkweg des Vorsprungs 40 in Richtung auf die unbetätigte Stellung 20 des zweiten Bedienelements 12. Das Halteelement 24 hält dadurch das zweite Bedienelement 12 in der zweiten betätigten Stellung 22, solange das dritte Bedienelement 13 vom Bediener in seiner betätigten Stellung 45 gehalten wird. Das Halteelement 24 greift im Ausführungsbeispiel auf der ersten Seite 9 der Mittelebene 8 am zweiten Bedienelement 12 ein und ragt in dessen Schwenkweg.

Der auf der gegenüberliegenden Seite des zweiten Bedienelements 12 angeordnete Vorsprung 40 wirkt in gleicher Weise mit dem zugeordneten Halteabschnitt 41 zusammen, wie Fig. 26 zeigt.

Wird das zweite Bedienelement 12 in seine nicht dargestellte erste betätigte Stellung 21 verstellt (vgl. Fig. 7), so wirken jeweils die erste Anlagefläche 51 der Vorsprünge 40 und die erste Anlagefläche 71 des zugeordneten Halteabschnitts 41 zusammen, um das zweite Bedienelement 12 in der ersten betätigten Stellung 21 zu halten, solange das dritte Bedienelement 13 sich in seiner betätigten Stellung 45 befindet.

Wie Fig. 27 zeigt, weist das zweite Bedienelement den Sperrabschnitt 62 auf, der durch zwei Rippen 75 gebildet ist. Entsprechend ist der Sperrbereich 63 am ersten Bedienelement 11 durch zwei Rippen 80 am ersten Bedienelement 11 gebildet.

Auch eine andere Anzahl und/oder Anordnung von Rippen 75 und 80 oder eine andere Gestaltung des Sperrabschnitts 62 und/oder des Sperrbereichs 63 kann vorteilhaft sein.

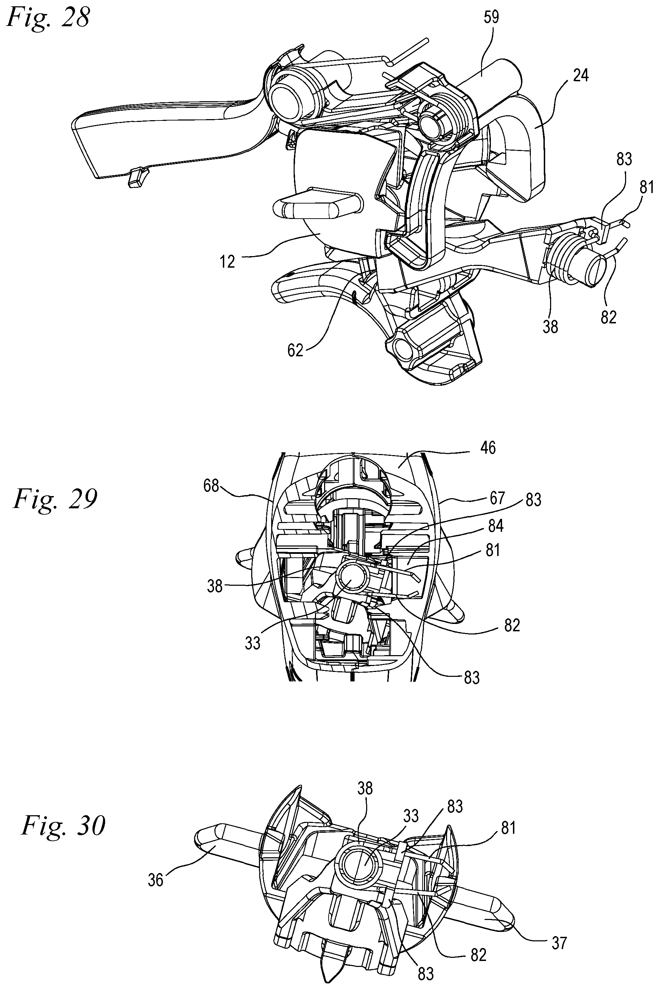

Fig. 28 zeigt die Anordnung des Halteelements 24 am zweiten Bedienelement 12.

Die Figuren 29 und 30 zeigen die Anordnung der Feder 38, die das zweite Bedienelement 12 in die unbetätigte Stellung 20 vorspannt. Die Feder 38 ist im Ausführungsbeispiel als Drehfeder oder Schenkelfeder ausgebildet. Auch eine andere Gestaltung der Feder 38 kann jedoch vorteilhaft sein. Die Feder 38 besitzt zwei Schenkel 81 und 82, die sich jeweils am zweiten Bedienelement 12 und am Gehäuse 46 abstützen. Für die Abstützung am zweiten Bedienelement 12 weist das zweite Bedienelement 12 Halterungen 83 auf.

Wie Fig. 29 zeigt, stützen sich beide Schenkel 81 und 82 an der gleichen Gehäusehalbschale 67 des Gehäuses 46 ab. Hierzu ragen die Schenkel 81 und 82 in eine in der Gehäusehalbschale 67 gebildete Aufnahme 84. Auch eine andere Gestaltung der Abstützung kann jedoch vorteilhaft sein. Dadurch, dass sich beide Schenkel 81 und 82 am gleichen Bauteil abstützen, können Lagetoleranzen zwischen dem Gehäuse 46 und der Feder 38 minimiert werden.

Wird das zweite Bedienelement 12 verschwenkt, so liegt einer der Schenkel 81 oder 82 an einer Halterung 83 an und der andere Schenkel 81 oder 82 liegt an der Aufnahme 84 des Gehäuses 46 an.

## Patentansprüche

1. Handgeführtes Arbeitsgerät mit einem Antriebsmotor (4), mit mindestens einem Werkzeug (23), das von dem Antriebsmotor (4) angetrieben ist, und mit mindestens einem Handgriff (5), wobei an dem Handgriff (5) ein erstes Bedienelement (11), ein zweites Bedienelement (12) und ein drittes Bedienelement (13) schwenkbar gelagert sind, wobei das erste Bedienelement (11) zur Ansteuerung des Antriebsmotors (4) ausgebildet ist und um eine erste Schwenkachse (14) schwenkbar gelagert ist, wobei das zweite Bedienelement (12) um eine zweite Schwenkachse (15) schwenkbar gelagert ist, wobei eine Sperreinrichtung (30) vorgesehen ist, die das erste Bedienelement (11) in einer Freigabestellung (31) der Sperreinrichtung (30) zur Bedienung des Antriebsmotors (4) freigibt und in einer Sperrstellung (32) der Sperreinrichtung (30) das erste Bedienelement (11) zur Bedienung des Antriebsmotors (4) sperrt, wobei die Sperreinrichtung (30) über das zweite Bedienelement (12) zwischen der Freigabestellung (31) und der Sperrstellung (32) verstellbar ist, wobei das dritte Bedienelement (13) um eine dritte Schwenkachse (16) schwenkbar gelagert ist, wobei das dritte Bedienelement (13) in seiner betätigten Stellung (45) das zweite Bedienelement (12) über ein Halteelement (24) in seiner betätigten Stellung hält, wobei das Halteelement (24) um eine vierte Schwenkachse (25) schwenkbar gelagert ist, **dadurch gekennzeichnet, dass** die zweite Schwenkachse (15) in einer Ebene (28) liegt, die senkrecht zur vierten Schwenkachse (25) verläuft.

2. Arbeitsgerät nach einem Anspruch 1,
**dadurch gekennzeichnet, dass** das zweite Bedienelement (12) in einer unbetätigten Stellung (20) eine Bewegung des ersten Bedienelements (11) in Richtung auf eine betätigte Stellung (43) des ersten Bedienelements (11) sperrt.

3. Arbeitsgerät nach einem Anspruch 1 oder 2,
**dadurch gekennzeichnet, dass** das zweite Bedienelement (12) aus der unbetätigten Stellung (20) in einer ersten Schwenkrichtung (49) in eine erste Freigabestellung (21) und in einer zweiten, entgegengesetzten Schwenkrichtung (50) in eine zweite Freigabestellung (22) verschwenkbar ist.

4. Arbeitsgerät nach einem der Ansprüche 1 bis 3,
**dadurch gekennzeichnet, dass** die dritte Schwenkachse (16) parallel zur ersten Schwenkachse (14) verläuft.

5. Arbeitsgerät nach einem der Ansprüche 1 bis 4,
**dadurch gekennzeichnet, dass** das dritte Bedienelement (13) über eine Feder (29) auf das Halteelement (24) wirkt.

6. Arbeitsgerät nach einem der Ansprüche 1 bis 5,
**dadurch gekennzeichnet, dass** die vierte Schwenkachse (25) parallel zur dritten Schwenkachse (16) verläuft.

7. Arbeitsgerät nach einem der Ansprüche 1 bis 6,
**dadurch gekennzeichnet, dass** das Arbeitsgerät (1) ein Führungsrohr (2) aufweist, das an seinem freien Ende eine Werkzeugeinheit (3) trägt

8. Arbeitsgerät nach Anspruch 7,
**dadurch gekennzeichnet, dass** das zweite Bedienelement (12) sich über einen Winkel von mindestens 180° um eine Längsmittelachse (7) des Führungsrohrs (2) erstreckt.

9. Arbeitsgerät nach Anspruch 7 oder 8,
**dadurch gekennzeichnet, dass** das zweite Bedienelement (12) an einem ersten Schwenklager (17) und einem zweiten Schwenklager (18) schwenkbar gelagert ist und dass die Sperreinrichtung (30) und das erste Schwenklager (33) des zweiten Bedienelements (12) auf einer Linie angeordnet sind, die parallel zur Längsmittelachse (7) des Führungsrohrs (2) verläuft.

10. Arbeitsgerät nach einem der Ansprüche 1 bis 9,
**dadurch gekennzeichnet, dass** das zweite Bedienelement (12) einen ersten Bedienabschnitt (35), einen zweiten Bedienabschnitt (36) und einen dritten Bedienabschnitt (37) aufweist, wobei die Bedienabschnitte (35, 36, 37) radial nach außen weisen.

## Claims

1. Hand-held implement having a drive motor (4), having at least one tool (23) which is driven by the drive motor (4), and having at least one handle (5), wherein a first operating element (11), a second operating element (12) and a third operating element (13) are mounted pivotably on the handle (5), wherein the first operating element (11) is configured for activating the drive motor (4) and is mounted so as to be pivotable about a first pivot axis (14), wherein the second operating element (12) is mounted so as to be pivotable about a second pivot axis (15), wherein provision is made of a blocking device (30) which, in a release position (31) of the blocking device (30), releases the first operating element (11) with regard to operation of the drive motor (4) and, in a blocking position (32) of the blocking device (30), blocks the first operating element (11) with regard to operation of the drive motor (4), wherein the blocking device (30) is adjustable between the release position (31) and the blocking position (32) via the second operating element (12), wherein the third operating element (13) is mounted so as to be pivotable about a third pivot axis (16), wherein, in its actuated position (45), the third operating element (13) holds the second operating element (12) in its actuated position via a holding element (24), wherein the holding element (24) is mounted so as to be pivotable about a fourth pivot axis (25),
**characterized in that** the second pivot axis (15) lies in a plane (28) which is perpendicular to the fourth pivot axis (25).

2. Implement according to Claim 1,
**characterized in that**, in a non-actuated position (20), the second operating element (12) blocks a movement of the first operating element (11) towards an actuated position (43) of the first operating element (11).

3. Implement according to Claim 1 or 2,
**characterized in that** the second operating element (12) is pivotable from the non-actuated position (20) into a first release position (21) in a first pivoting direction (49) and into a second release position (22) in a second, opposite pivoting direction (50).

4. Implement according to one of Claims 1 to 3,
**characterized in that** the third pivot axis (16) is parallel to the first pivot axis (14).

5. Implement according to one of Claims 1 to 4,
**characterized in that** the third operating element (13) acts on the holding element (24) via a spring (29).

6. Implement according to one of Claims 1 to 5,
**characterized in that** the fourth pivot axis (25) is parallel to the third pivot axis (16).

7. Implement according to one of Claims 1 to 6,
**characterized in that** the implement (1) has a guide tube (2) which, at its free end, carries a tool unit (3).

8. Implement according to Claim 7,
**characterized in that** the second operating element (12) extends around a longitudinal central axis (7) of the guide tube (2) over an angle of at least 180°.

9. Implement according to Claim 7 or 8,
**characterized in that** the second operating element (12) is mounted pivotably on a first pivot bearing (17) and a second pivot bearing (18), and **in that** the blocking device (30) and the first pivot bearing (33) of the second operating element (12) are arranged on a line that is parallel to the longitudinal central axis (7) of the guide tube (2).

10. Implement according to one of Claims 1 to 9,
**characterized in that** the second operating element (12) has a first operating portion (35), a second operating portion (36) and a third operating portion (37), wherein the operating portions (35, 36, 37) are directed radially outwards.

## Revendications

1. Appareil de travail portatif avec un moteur d'entraînement (4), avec au moins un outil (23), qui est entraîné par le moteur d'entraînement (4), et avec au moins une poignée (5), un premier élément de commande (11), un deuxième élément de commande (12) et un troisième élément de commande (13) étant montés de manière à pouvoir pivoter sur la poignée (5), le premier élément de commande (11) étant formé pour piloter le moteur d'entraînement (4) et étant monté de manière à pouvoir pivoter autour d'un premier axe de pivotement (14), le deuxième élément de commande (12) étant monté de manière à pouvoir pivoter autour d'un deuxième axe de pivotement (15), un dispositif de blocage (30) étant prévu, qui libère le premier élément de commande (11) dans une position de libération (31) du dispositif de blocage (30) pour commander le moteur d'entraînement (4) et qui bloque, dans une position de blocage (32) du dispositif de blocage (30), le premier élément de commande (11) pour commander le moteur d'entraînement (4), le dispositif de blocage (30) pouvant être ajusté entre la position de libération (31) et la position de blocage (32) par l'intermédiaire du deuxième élément de commande (12), le troisième élément de commande (13) étant monté de manière à pouvoir pivoter autour d'un troisième axe de pivotement (16), le troisième élément de commande (13) maintenant dans sa position actionnée (45) le deuxième élément de commande (12) par un élément de retenue (24) dans sa position actionnée, l'élément de retenue (24) étant monté de manière à pouvoir pivoter autour d'un quatrième axe de pivotement (25), **caractérisé en ce que** le deuxième axe de pivotement (15) se trouve dans un plan (28) qui s'étend perpendiculairement au quatrième axe de pivotement (25).

2. Appareil de travail selon la revendication 1,
**caractérisé en ce que**, dans une position non actionnée (20), le deuxième élément de commande (12) bloque un mouvement du premier élément de commande (11) en direction d'une position actionnée (43) du premier élément de commande (11).

3. Appareil de travail selon la revendication 1 ou la revendication 2,
**caractérisé en ce que** le deuxième élément de commande (12) peut pivoter de la position non actionnée (20) dans une première direction de pivotement (49) dans une première position de libération (21) et dans une deuxième direction de pivotement opposée (50) dans une deuxième position de libération (22).

4. Appareil de travail selon l'une des revendications 1 à 3,
**caractérisé en ce que** le troisième axe de pivotement (16) s'étend parallèlement au premier axe de pivotement (14).

5. Appareil de travail selon l'une des revendications 1 à 4,
**caractérisé en ce que** le troisième élément de commande (13) agit sur l'élément de retenue (24) par un ressort (29).

6. Appareil de travail selon l'une des revendications 1 à 5,
**caractérisé en ce que** le quatrième axe de pivotement (25) s'étend parallèlement au troisième axe de pivotement (16).

7. Appareil de travail selon l'une des revendications 1 à 6,
**caractérisé en ce que** l'appareil de travail (1) comporte un tube de guidage (2) qui porte une unité d'outil (3) sur son extrémité libre.

8. Appareil de travail selon la revendication 7,
**caractérisé en ce que** le deuxième élément de commande (12) s'étend sur un angle d'au moins 180° autour d'un axe médian longitudinal (7) du tube de guidage (2).

9. Appareil de travail selon la revendication 7 ou la revendication 8,
**caractérisé en ce que** le deuxième élément de commande (12) est monté de manière à pouvoir pivoter sur un premier palier de pivotement (17) et un deuxième palier de pivotement (18), et que le dispositif de blocage (30) et le premier palier de pivotement (33) du deuxième élément de commande (12) sont disposés sur une ligne qui s'étend parallèlement à l'axe médian longitudinal (7) du tube de guidage (2).

10. Appareil de travail selon l'une des revendications 1 à 9,
**caractérisé en ce que** le deuxième élément de commande (12) comporte une première section de commande (35), une deuxième section de commande (36) et une troisième section de commande (37), les sections de commande (35, 36, 37) pointant vers l'extérieur radialement.
